# EUROPEAN PATENT APPLICATION

(11) **EP 2 011 985 A2**
(43) Date of publication of application: **07.01.2009**
(21) Application number: 08104178.2
(22) Date of filing: 30.05.2008
(51) Int. Cl.: F02D 41/24, F02D 41/34, F02D 19/08

(54) **A method for controlling carburetion in motor vehicles partially fuelled with ethanol**

(30) Priority: 04.07.2007 IT PR20070052
(71) Applicant: A.E.B. S.r.l., 42025 Cavriago (Reggio Emilia) (IT)
(72) Inventor: Baroni, Vincenzo, 42025 Cavriago (Reggio Emilia) (IT)
(74) Representative: Gotra, Stefano

(57) **Abstract**

A method for controlling carburetion in motor vehicles partially fuelled with ethanol in which OBD provides information, called corrector parameters, about corrections made by an ECU to the injection times to make carburetion optimal, is characterised in that it comprises the steps of:
- reading the correcting parameters from the OBD;
- computing the necessary variation to the injection time and changing the injection time with respect to the time the ECU is imposing by means of its own mapping operation, in order to progressively reduce the absolute value of the correcting parameters, i.e. in such a way as to make them tend to zero.

## Description

The present invention relates to a method for controlling carburetion in motor vehicles set to be fuelled with petrol only, and subsequently fuelled with ethanol or with a variable mixture of petrol-ethanol.

For environmental issues and for better exploitation of energy resources, fuels alternative to petrol are used increasingly often.

One of them is Ethanol, sold under various denominations according to its percentage of mixing with petrol (e.g. E85 (85% ethanol), E95 (95% of ethanol) ... ).

Vehicles set for petrol operation can operate with these mixtures, but it is necessary to modify carburetion because ethanol has lower heat value than petrol: to obtain the same quantity of energy, a greater quantity of ethanol than of petrol is required.

Systems for controlling the combustion of motor vehicles operating with fuel mixtures, partially petrol and partially ethanol, already exist. Ethanol-based fuels currently available on the market are normally designated E85 and E95 according to the percentage in volume (85% or 95% respectively) of ethanol they contain.

The presence of ethanol entails imbalances in carburetion (normally managed electronically) because ethanol has lower heat value than gasoline and hence would require longer injection times than petrol: more fuel is needed to obtain the same energy.

The situation becomes yet more complicated when the user pours E85 or E95 in a tank still containing a significant quantity of petrol, leading to the formation of intermediate mixtures, composed by unknown percentages of petrol and ethanol.

Making the situation extreme, the tank can contain a mixture of fuel with presence of ethanol from 0 to 95%.

In the case of electronic injection vehicles, the injection time of the injectors has to be lengthened, consequently increasing the quantity of fuel injected to offset the lower energy yield of the mixed Petrol-Ethanol fuel.

Carburetion management units used on petrol vehicles have the possibility of modifying fuel injection times to offset component aging, fabrication tolerances, fuels in the tank differing slightly from nominal values, operation of the vehicle in different climates (dry, damp, mountain, plain, cold, heat).

However, this adaptability is not sufficient to offset large carburetion changes due to the use of ethanol.

Using such mixtures, the unit usually recognises poor carburetion, trying at first to correct it, but not being able to do so it lights up alarm indicator lights and it goes into a recovery situation (and sometimes it shuts the vehicle down).

An object of the present invention is to eliminate the aforesaid drawbacks, making available a method for controlling carubreation that can be effective even in case of intermediate mixtures of ethanol even with a percentage of ethanol between 0 and 95%.

An additional object is to make this available in a simple and economic manner.

Said objects are fully achieved by the method of the present invention, which is characterised by the content of the appended claims and in particular in that it comprises the steps of:
- reading the corrector parameters from the OBD;
- computing the necessary variation to the injection time and changing the injection time with respect to the time the ECU is imposing by means of its own mapping operation, in order progressively to reduce the absolute value of the corrector parameters, i.e. in such a way as to make them tend to zero.

This and other characteristics shall become more readily apparent from the following description of a preferred embodiment, having exemplifying and non limiting character.

The present invention consists of a method for correcting carburetion in normally petrol-fuelled vehicles, when wanting to enable the use of even partial ethanol fuelling, i.e. with mixtures of petrol-ethanol with variable ethanol percentage.

Currently, according to the "Euro3" standard of 2001, motor vehicles must be equipped with an OBD (On-Board Diagnostic) system, a communication standard that provides for signalling among the various parameters also one or more parameters pertaining to the corrections the vehicle is making on carburetion for an optimal operation (for example, whether it is increasing or reducing the quantity of fuel).

For precision, reference is made to the parameters that are defined:
Short term fuel trim Bank1
Short term fuel trim Bank2
Long term fuel trim Bank1
Long term fuel trim Bank2
in the reference standards SAE J1979 (American standard) equivalent to ISO/DIS 15031-5 (European standard).

The innovative idea of the present method is to read these parameters, to understand in which direction the vehicle is moving carburetion, and based on this to reduce or (typically) increase fuel injection times to offset the differences in heat value of the fuel present in the tank.

A greater percentage of ethanol (which has less energy value than petrol) requires a greater quantity of fuel and hence an extension of the injection times relative to those typically used for petrol fuelling.

Normally, the corrections which the vehicle must make to offset said deviations are rather small (2-5%) and the maximum variations the manufacturer allows are nomally within 15-20%, beyond which threshold the ECU signals a severe engine malfunction, usually turns an indicator light on and shuts the engine off, making the vehicle unusual until the restoration of the acceptable operating conditions.

When fuels very different from petrol are introduced (ethanol is a typical case), carburetion deviates greatly from the typical operating point and the deviation can be so sizeable as to cause the engine to ECU to shut the engine down and stop the vehicle.

The method of the present invention is originally based on reading the "correctors" and on a feed-back mechanism which, acting on the injectors, corrects injection times so that the ECU maintains its corrections very low (ideally, zero) preventing situations of severe malfunctions with engine shut-down.

In this way, an optimal operation of the vehicle is assured.

With respect to traditional injector driving methods in the presence of ethanol, the present method has the advantage of operating correctly independently of the composition of the ethanol-gasoline mixture present in the tank.

Traditional methods assume a fixed concentration of ethanol in the petrol (e.g. 85%) and based thereon they correct injection times extending them by a fixed percentage, suitable for that type of mixture.

When, as a result of refuelling with a different mixture of fuel, or of refuelling with petrol or E85 with the presence in the tank respectively of E85 or petrol in significant quantity, the mixture in the tank varies considerably from the standard, and it becomes for example composed by 35% ethanol and 65% petrol, the traditional system continues to correct injection times as if 85% of ethanol were present and hence it "over-corrects", excessively extending injection times and forcing the ECU to operate with corrector parameters that are very far from the optimal point (zero correctors).

The consequence of this is that the vehicle operates poorly and pollutes more.

Corrections made to carburetion are not instantaneous because the ECU is programmed to correct small deviations rapidly and nearly instantaneously (rapid correctors), but to wait a long time befor making large corrections (slow correctors) because of the need to be sure that the correction is actually required and it is not an error in reading the parameter.

Depending on the driving conditions, tens or hundreds of kilometers may be travelled, during which the vehicle signals high correctors before moving the injection times and correct carburetion.

During all these kilometers, the vehicle emits many pollutants because carburetion is not optimal and drivability is degraded.

While mechanical parts tolerate well the fuel change between petrol and ethanol, traditional electronic units are not set up to operate correctly with fuels containing a sizeable percentage of ethanol.

The present innovative method instead is independent of the type of fuel mixture contained in the tank and assures an optimal operation in all conditions, because the vehicle does not have to make compensations, which are performed by an auxiliary unit that draws the correctors from the OBD and compensates carburetion instead of the petrol ECU, reading its data.

The auxiliary unit is connected to the OBD and to the injectors and in some cases it replaces the ECU of the vehicle.

The present method allows a rapid adaptation of carburetion, minimising pollutants and improving the drivability of the vehicle.

The present method does not apply to vehicles that already leave the factory with bi-fuel capability (which are not very widespread), i.e. to vehicles for which the possibility of operating indifferently with ethanol and with fuel is provided in the factory, because they are already fitted with an electronic unit set to change mapping according to the fuel. This electronic unit, however, is more complex and costly than a traditional one and it requires the presence of a higher number of sensors, so it cannot be applied to vehicles originally built with a single type of fuel.

The present method instead applies to vehicles built with a single type of fuel (petrol) which are to be made bi-fuel capable, i.e. adapted to operate also with ethanol-petrol mixtures whose relative percentage of petrol/ethanol is not known, through an innovative use of the electronics on board the vehicle and in particular of the ECU.

The innovative method provides for adapting to the mixture present in the tank going to read some standard parameters which the ECU of the vehicle normally communicates through OBD, reads the corrector parameters and acts on the injectors closing a feedback loop in such a way as to maintain the correctors of the ECU close to the resting point, i.e. close to zero value.

In this way, an optimal carburetion is obtained without making assumptions or approximations on the content of the mixture present in the tank.

The method thus comprises:
- reading the corrector parameters from the OBD, to have an indication of how much the ECU of the vehicle is trying to compensate carburetion because it detects an incorrect carburetion of the vehicle through the oxygen sensor at the exhaust, due to the presence of a different fuel from the one for which the ECU was set up;
- computing the necessary variation to the injection time and changing the injection time with respect to the time the ECU is imposing by means of its own mapping operation, in order progressively to reduce the absolute value of the corrector parameters, i.e. in such a way as to make them tend to zero.

Given the operating principle, correction is automatically excluded when the operation of the vehicle is with petrol without addition of ethanol.

For example, if parameters are read which indicate that the carburetion of the vehicle is outside the norm by 20%, this error is progressively reduced to 18%, 16%, ...5%..., down to zero and appropriately modifying the injection times at each feedback the zero is reached rather quickly, without having to wait a few hundreds of kilometers for the vehicle to settle itself.

The method comprises a feedback control in which, as a function of the reading of the corrector parameters and of the injection times implemented by the ECU, said injection times are modified in such a way as to keep the corrector parameters at a predefined setpoint of optimal operation, which corresponds to the situation in which the corrector parameters are nil.

On the contrary, currently used systems which oversee the operation of a petrol fuelled vehicle converted to operation also with ethanol-based mixture, correct carburetion with a constant contribution, hence making a hypothesis on the composition of the fuel and considering it fixed at a standard value (typically E85 or E95). By so doing, if the mixture inside the tank does not have this composition, e.g. as a result of refuelling with petrol when the tank still contains a significant quantity of ethanol, the vehicle operates poorly, pollutes more especially in its initial operation after the refuelling and in the worst cases the ECU may signal situations that are so anomalous as to cause the shut-down of the vehicle.

An advantage of the present method is that it is simple and economical, because it only entails the use of a small auxiliary unit connected to the injectors and to the OBD.

## Claims

1. A method for controlling carburetion in motor vehicles partially fuelled with ethanol and provided with a tank where petrol and/or a mixture of ethanol and petrol is poured, said vehicles being provided with ECU and OBD, in which the OBD provides information, called corrector parameters, about corrections made by the ECU to the injection times to make carburetion optimal,
**characterised in that** it comprises the steps of:
- reading the corrector parameters from the OBD;
- computing the necessary variation to the injection time and changing the injection time with respect to the time the ECU is imposing by means of its own mapping operation, in order progressively to reduce the absolute value of the corrector parameters, i.e. in such a way as to make them tend to zero.

2. Method as claimed in claim 1, wherein the method is independent of the percentage of ethanol constituting the mixture of fuel present in the tank of the vehicle, i.e. it makes it unnecessary to know the percentage of ethanol present in said mixture beforehand.

3. Method as claimed in claim 1, wherein a feedback control is provided in which, as a function of the reading of the corrector parameters and of the injection times implemented by the ECU, said injection times are modified in such a way as to keep the corrector parameters at a predefined setpoint of optimal operation.

4. Method as claimed in claim 1, wherein the corrections are excluded when the operation of the vehicle is with petrol without addition of ethanol, an optimal carburetion being detected with substantially nil corrector parameters.

5. Method as claimed in claim 1, wherein the computation of the necessary variation of the injection time and the modification of the injection time takes place by means of an auxiliary unit connected to the injectors of the vehicles and to the OBD and such as to replace in some cases the ECU of the vehicle.

6. Method as claimed in claim 1, wherein the reading of the parameters comprises both the reading of "rapid correctors" and of "slow correctors".
